# EUROPEAN PATENT APPLICATION

(11) **EP 0 799 635 A1**
(43) Date of publication of application: **08.10.1997**
(21) Application number: 97200885.8
(22) Date of filing: 25.03.1997
(51) Int. Cl.: B01D 53/26

(54) **Method and device for drying a compressed gas**

(30) Priority: 02.04.1996 BE 9600283
(71) Applicant: ATLAS COPCO AIRPOWER N.V., 2610 Wilrijk (BE)
(72) Inventor: Vertriest, Danny Etienne Andrée, 2550 Kontich (BE)
(74) Representative: Donné, Eddy

(57) **Abstract**

Method for drying a gas which has been compressed by a compressor (1) whereby this gas (2) is driven through an amount of drying agent (3) until a dried, compressed gas (4) is obtained, whereas an amount of used drying agent (7) is regenerated by driving a part (5) of the compressed gas through the used drying agent (7), so that moist is absorbed from the used drying agent (7), which is then condensed and separated by means of cooling, after which this part (5) of the gas is mixed again with the compressed gas (2) to be dried, characterized in that the part (5) of the gas which is driven through the used drying agent (7) is a part of the already dried compressed gas (4) and is heated first by the compression heat of the compressor (1).

## Description

The invention concerns a method for drying a gas which has been compressed by a compressor.

Compressed gas, for example air, usually has a high moisture content on the outlet of the compressor. This moisture can be disadvantageous to the network of pipes and undesirable in certain applications. Therefor, it is useful if not necessary to dry the compressed air.

According to a known method, described in BE-A-1005764, the compressed gas is driven through a drying agent, whereas already used drying agent is simultaneously regenerated by driving a part of the gas compressed by the compressor through it, which is tapped directly on the outlet of the compressor. This gas absorbs water from the already used drying agent, which is then condensed and separated by cooling the gas, after which the gas is mixed again with the compressed gas to be dried.

Such a method is disadvantageous in that the regeneration is carried out with a gas which is still moist, as a result of which the drying or regeneration of the drying agent is rather slow. Consequently, the regeneration of an amount of drying agent takes relatively long compared to the time required to saturate the same amount of drying agent with moist during the drying.

Also, a relatively high regeneration temperature is necessary to make the regeneration process take place at an acceptable speed. Due to the operating conditions of the compressor, for example a low service pressure and/or frequent load/no-load running, said high regeneration temperature is not always available.

The invention aims a method for drying gas which has been compressed by a compressor which excludes the above-mentioned and other disadvantages, and whereby an efficient drying of the compressed gas is obtained.

To this aim, the method for drying a gas which has been compressed by a compressor mainly consists of driving this gas, possibly after it has been pre-cooled, through an amount of drying agent until a dried, compressed gas is obtained, whereas an amount of used drying agent is regenerated by driving a part of the compressed gas through the used drying agent, so that moist is absorbed from the used drying agent which is then condensed and separated by means of cooling, after which this part of the gas is mixed again with the compressed gas to be dried, whereby the part of the gas which is driven through the used drying agent is a part of the already dried compressed gas and is heated first by the compression heat of the compressor.

As the gas which is used for the regeneration of the drying agent has a high temperature and a low humidity, said regeneration will be fast and efficient.

No extra energy is required to heat the gas, since the compression heat is available anyway.

This compression heat can be derived by means of heat exchange with either the cooling agent of the compressor or the compressed air itself. The first is especially the case with oil-injected compressors, whereas the second is especially the case with oil-free compressors.

The invention also concerns a device to apply the method as described above, which device contains a drying duct system through which the compressed gas to be dried flows and which is connected to the compressor via a pipe with an ejector on the one hand, and which is connected to a discharge pipe on the other hand, and which has a drying zone filled with a drying agent; and which contains a regeneration duct system having a regeneration zone with used drying agent, which regeneration zone is connected to the above-mentioned discharge pipe by means of a pipe over a heat exchanger through which flows fluid which has been heated by the compression on the one hand, and which is connected to the suction inlet of the above-mentioned ejector by means of a pipe and over a cooler on the other hand.

A preferred embodiment of the invention contains means to exchange the drying agent from the drying zone after a certain length of time with the drying agent from the regeneration zone which has been regenerated in the meantime. As a result, the drying of the compressed gas can be carried out as an almost continuous process.

In order to better explain the characteristics of the invention, the following preferred embodiment of a method and a device for drying a gas which has been compressed by a compressor according to the invention is described with reference to the accompanying drawings, in which:
figure 1 represents a block diagram of the method according to the invention;
figure 2 schematically represents a preferred embodiment of a device according to the invention;
figure 3 shows a view in perspective of the drying agent used in the device according to figure 2;
figure 4 represents a block diagram analogous to that in figure 1, but with reference to a variant of the method;
figure 5 schematically shows a view of a device analogous to that in figure 3, but with reference to the method according to the block diagram of figure 4.

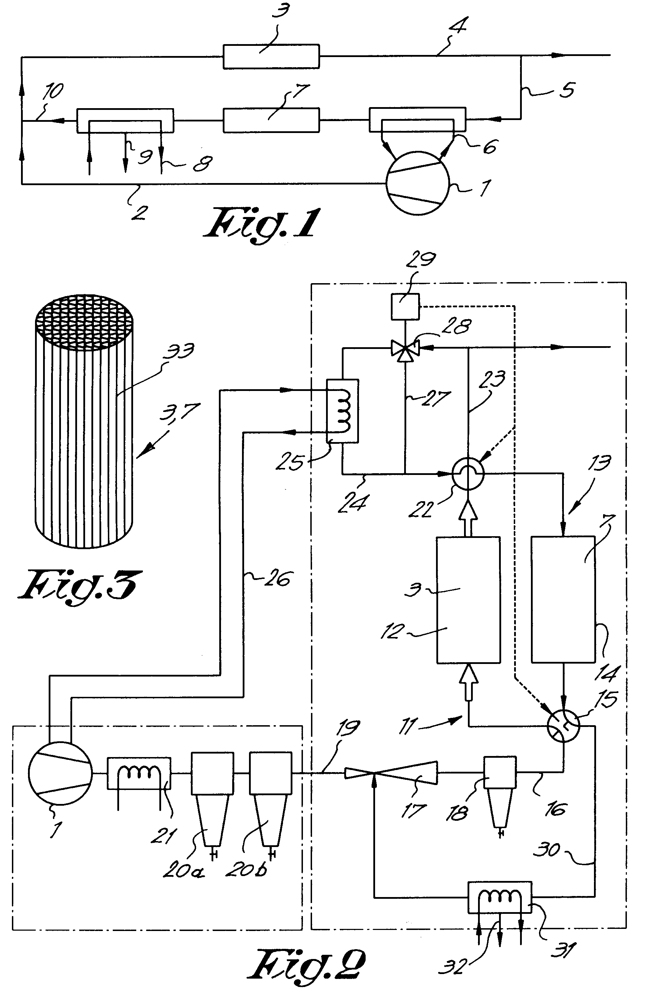

In order to dry a gas 2 which has been compressed by a compressor 1, as is represented in figure 1, this gas 2 is driven through an amount of drying agent 3.

Simultaneously, a part 5 of the already dried compressed gas 4, after having been heated thanks to the compression heat of the compressor 1, in the example of figure 1 thanks to heat exchange with the cooling liquid 6 of the compressor 1, is driven through a practically equally large amount of drying agent 7 so as to regenerate the latter, after which this part 5 is cooled, for example by means of heat exchange with a cooling liquid 8 so as to condense the absorbed moist from the used drying agent 7.

The condensed moist 9 Is separated and the remaining cooled and relatively dry gas 10 is subsequently mixed with the compressed gas 2 which must still be dried.

Each time the amount of drying agent 3 is saturated, it can be exchanged with the amount of drying agent 7 which has been regenerated in the meantime, whereby the regenerated drying agent 7 is cooled during a time interval, right before the exchange, preferably by momentarily driving the above-mentioned part 5 of the dried gas 4 through it, without however heating it by means of the compression heat, in the example of figure 1 without exchanging heat with the cooling liquid 6 of the compressor 1.

As the compression heat of the compressor 1 is always available, no extra energy supply is required to heat the dried gas 4.

When an appropriate regeneration flow is selected, the regeneration of the used drying agent 7 is faster than the saturation of the drying agent 3. The time remaining until the moment of exchange can be used to cool the regenerated drying agent 7.

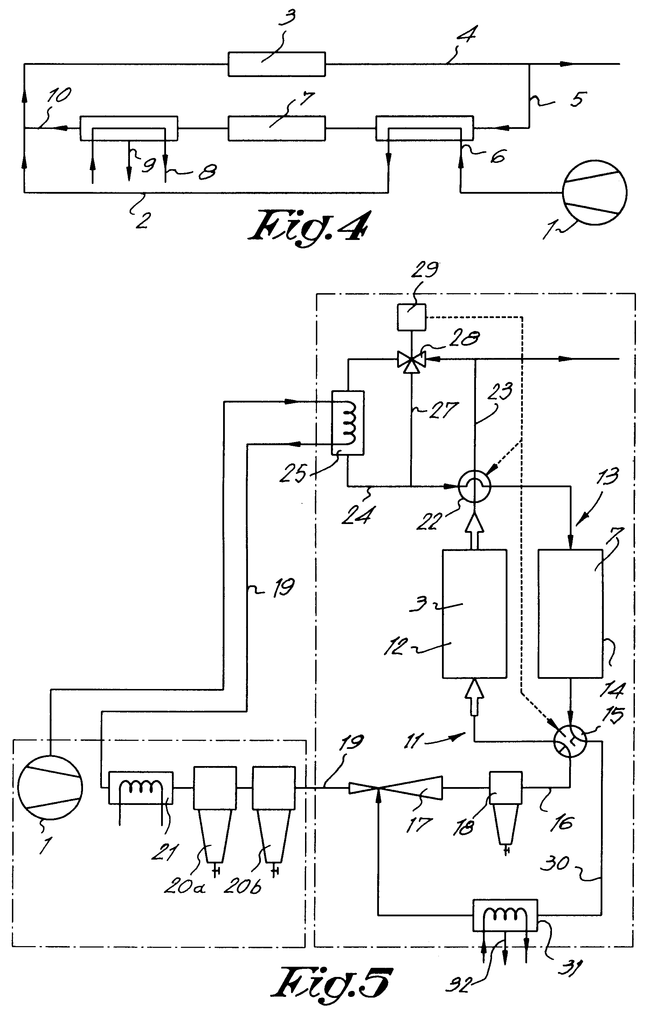

In order to carry out the above-described method, the device as represented in figure 2 can be used.

This device contains a drying installation 11 through which the compressed gas 2 to be dried flows, which is connected onto the compressor 1 and which contains a drying zone 12 which is filled with an amount of drying agent 3, and a regeneration duct system 13 with a regeneration zone 14 in which a practically equal amount of used drying agent 7 is provided.

The inlet of the drying duct system 11 is connected via a four-way valve 15 to a pipe 16 which is connected onto the outlet of an ejector 17 and in which is erected a water separator 18. The inlet of the ejector 17 is connected onto the outlet of the compressor 1 via a pipe 19 in which are mounted a water separator 20a, a filter 20b and a cooler 21.

Onto the outlet of the drying duct system 11 is connected a discharge pipe 23 for dried, compressed gas 4 via a four-way valve 22.

The inlet of the regeneration duct system 13 is connected onto a pipe 24 in which is mounted a heat exchanger 25 by means of the above-mentioned four-way valve 22. The primary circuit of this heat exchanger 25 is the cooling circuit 26 of the compressor 1.

The heat exchanger 25 is bridged by a pipe 27 which is connected upstream in relation to the heat exchanger 25 onto the pipe 24 by means of a three-way valve 28. This three-way valve is coupled onto a control unit 29.

By means of the above-mentioned four-way valve 15, the outlet of the regeneration duct system 13 is connected onto a pipe 30 in which is erected a cooler 31 and which is connected in turn onto the suction inlet of the above-mentioned ejector 17. The cooler 31 is provided with a discharge pipe 32 for condensed moist 9.

The above-mentioned drying agent 3 or 7 consists of or contains a desiccant which absorbs moist, such as silica gel, molecular sieves or activated alumina. It may have various shapes, such as the shape of desiccant grains stacked in a reservoir or it may contain a desiccant provided on a support 33 which for example forms a bundle of ducts as represented in figure 3.

This support 33 is made of cardboard on the basis of glass fibres and has a honeycomb structure which is covered with the desiccant on the inside. As a result, the contact surface with the desiccant is very large.

The above-mentioned four-way valves 15 and 22 are also coupled to the control unit 29, and together with said control unit they form means to exchange the drying agent 3 in the drying zone 12 with the drying agent 7 in the regeneration zone 14, in particular to turn the drying duct system 11 into the regeneration duct system 13 and vice versa.

The working of the device is simple and as follows.

The compressed gas to be dried coming from the compressor 1, which has a temperature of about 30°C after having been pre-cooled in the cooler 21, is driven through the drying duct system 11 by means of the ejector 17 via the pipe 16. In the water separator 18, any moist which is still present is separated, and in the drying zone 12, the gas is further dried by the drying agent 3.

The dried gas 4 leaves the drying device via the pipe 23 at a temperature of about 40°C.

At the same time, used drying agent 7 is regenerated in the regeneration zone 14 by tapping off a part 5 of the dried gas 4 via the pipe 24 and by driving it through the drying agent 7. The three-way valve 28 hereby leaves the pipe 24 open, whereas it closes off the pipe 27.

In the heat exchanger 25, which is included in the pipe 24, the tapped off part 5 of the gas 4 is heated up to a temperature of about 80°C by cooling liquid 6 which has absorbed the compression heat and has a temperature of about 90°C.

After the used drying agent 7 has been dried, the thus heated part 5 of the gas 4 is cooled in the cooler 31, whereby the condensed moist 9 is separated via the discharge pipe 32.

The remaining cooled gas 10 at a temperature of about 30°C is sucked in via the pipe 30 through the suction inlet of the venturi of the ejector 17.

Immediately after the venturi on the inlet of the ejector 17, this cold gas 10 is mixed with compressed gas 2 to be dried from the compressor 1 in a mixing zone. Near the outlet of the ejector 17, the pressure of the cold gas is recycled.

After the drying agent 7 has been sufficiently regenerated, for example after a preset time, the control unit 29 orders the three-way valve 28 to change its position into the position in which it interrupts the pipe 24 and connects the pipe 27 to the pipe 23.

As a result, the part 5 of the gas which is driven through the drying agent 7 is no longer heated, so that said drying agent 7 cools down.

When the drying agent 3 is saturated with moist, the control unit 29 orders the four-way valves 15 and 22 to change their positions such that the drying duct system 11 and the regeneration duct system 13 change places, so that the drying agent 3 which has been saturated with moist in the meantime forms the drying agent 7, and so that the regenerated drying agent 7 becomes the drying agent 3.

In this manner, the same amount of drying agent successively becomes drying agent 3 and regenerating drying agent 7, so that the working of the drying device is practically continuous.

The drying of the compressed gas 2 of the compressor is thus carried out in a very efficient and economical manner.

The embodiment of the method represented by the block diagram of figure 4 only differs from the above-described method in that the heating of the part 5 of the compressed gas, which is used for the regeneration of the used drying agent 7, is not heated by cooling liquid 6 of the compressor 1, but directly by the hot, compressed gas which leaves the compressor 1. This embodiment can be applied in particular in oil-free compressors.

This method has the same advantages as the above-described method.

Consequently, the device which is used to carry out this embodiment of the method and which is represented in figure 5 only differs from the embodiment represented in figure 2 in that the primary circuit of the heat exchanger 25 is no part of a cooling circuit, but is part of the section of the pipe 19 for the hot, compressed air which is situated between the compressor 1 and the cooler 21.

The use and advantages of this device are as described in relation to the embodiment according to figures 1 and 2.

The invention is by no means limited to the above-described embodiment represented in the accompanying drawings; on the contrary, such a method and device for drying a gas which has been compressed by a compressor can be carried out in all sorts of variants while still remaining within the scope of the invention.

Thus, the means to exchange the drying agents may contain a rotor instead of two four-way valves upon which the drying zone and the regeneration zone are provided, whereby these zones can be brought from the drying duct system into the regeneration duct system or vice versa thanks to the rotation of the rotor.

## Claims

1. Method for drying a gas which has been compressed by a compressor (1) whereby this gas (2) is driven through an amount of drying agent (3) until a dried, compressed gas (4) is obtained, whereas an amount of used drying agent (7) is regenerated by driving a part (5) of the compressed gas through the used drying agent (7), so that moist is absorbed from the used drying agent (7), which is then condensed and separated by means of cooling, after which this part (5) of the gas is mixed again with the compressed gas (2) to be dried, characterized in that the part (5) of the gas which is driven through the used drying agent (7) is a part of the already dried compressed gas (4) and is heated first by the compression heat of the compressor (1).

2. Method according to claim 1, characterized in that the part (5) of the gas is heated by the compression heat as a result of the heat exchange with the cooling agent of the compressor (1).

3. Method according to claim 1, characterized in that the part (5) of the gas is heated by the compression heat as a result of the heat exchange with the compressed air itself.

4. Method according to any of the preceding claims, characterized in that, after a certain length of time, the drying agent (3) is exchanged with the drying agent (7) which has been regenerated in the meanwhile.

5. Method according to claim 4, characterized in that the regenerated drying agent (7) is cooled right before the exchange.

6. Method according to claim 5, characterized in that this cooling is carried out by the part (5) of the dried, compressed gas (4) which is used for the regeneration, but which is not heated by the compression heat.

7. Device to apply the method according to any of the preceding claims, which device contains a drying duct system (11) through which the compressed gas (2) to be dried flows and which is connected to the compressor (1) via a pipe (16) containing an ejector (17) on the one hand, and which is connected to a discharge pipe (23) on the other hand, and which has a drying zone (12) filled with a drying agent (3); and which contains a regeneration duct system (13) having a regeneration zone (14) with used drying agent (7), characterized in that this regeneration zone (14) is connected to the above-mentioned discharge pipe (23) by means of a pipe (24) over a heat exchanger (25) through which flows fluid which has been heated by the compression on the one hand, and which is connected to the suction inlet of the above-mentioned ejector (17) by means of a pipe (30) over a cooler (31) on the other hand.

8. Device according to claim 7, characterized in that the primary circuit of the heat exchanger (25) is the cooling circuit (26) of the compressor (1).

9. Device according to claim 7, characterized in that the primary circuit of the heat exchanger (25) is a part of the pipe (19) for hot, compressed gas which is connected onto the outlet of the compressor (1).

10. Device according to any of claims 7 to 9, characterized in that it contains means (15-22-29) to exchange the drying agent (3) from the drying zone (12) with drying agent (7) from the regeneration zone (14) which has been regenerated in the meantime.

11. Device according to claim 10, characterized in that the means (15-22-29) mainly consist of two four-way valves (15 and 22) onto which both the drying duct system (11) and the regeneration duct system (13) are connected with one end and which are coupled to a control unit (29).

12. Device according to claim 10, characterized in that the means to exchange the drying agent (3) from the drying zone (12) with drying agent (7) from the regeneration zone (14) which has been regenerated in the meantime contain a rotor upon which the drying zone (12) and the regeneration zone (14) are provided and with which these zones can be brought from the drying duct system (11) into the regeneration duct system (13) or vice versa.

13. Device according to any of claims 7 to 12 included, characterized in that the pipe (24) with which the regeneration duct system (13) is connected onto the discharge pipe (23) is equipped with a three-way valve (28) onto which is connected a pipe (27) which bridges the heat exchanger (25) and which is coupled to a control unit (29).
